# EUROPEAN PATENT SPECIFICATION

(11) **EP 4 116 353 B1**
(45) Date of publication and mention of the grant of the patent: **24.07.2024**
(21) Application number: 21877936.1
(22) Date of filing: 05.10.2021
(51) Int. Cl.: C08G 63/08, C08G 63/82, C08G 63/83, C08G 63/85

(54) **COPOLYMER AND PREPARATION METHOD THEREFOR**
COPOLYMER UND HERSTELLUNGSVERFAHREN DAFÜR
COPOLYMÈRE ET SON PROCÉDÉ DE PRÉPARATION

(30) Priority: 05.10.2020 KR 20200128319
(43) Date of publication of application: 11.01.2023
(73) Proprietor: LG Chem, Ltd., Seoul 07336 (KR)
(72) Inventor: CHOI, Jung Yun, Daejeon 34122 (KR); KIM, Chul Woong, Daejeon 34122 (KR); LEE, Yeonju, Daejeon 34122 (KR); CHO, Suhyun, Daejeon 34122 (KR)
(74) Representative: Goddar, Heinz J.
(86) International application number: PCT/KR2021/013586
(87) International publication number: WO 2022/075684

(56) References cited:
- CN-C- 100 372 881
- US-A1- 2013 184 429
- US-A1- 2017 106 125
- MARC A. HILLMYER: "High performing sustainable thermoplastic elastomers", UNIVERSITY OF MINNESOTA, 1 January 2019 (2019-01-01), XP055918969, Retrieved from the Internet <URL:https://core.ac.uk/download/pdf/226939724.pdf> [retrieved on 20220509]
- AMADOR ADRIAN G., WATTS ANNABELLE, NEITZEL ANGELIKA E., HILLMYER MARC A.: "Entropically Driven Macrolide Polymerizations for the Synthesis of Aliphatic Polyester Copolymers Using Titanium Isopropoxide", MACROMOLECULES, AMERICAN CHEMICAL SOCIETY, US, vol. 52, no. 6, 26 March 2019 (2019-03-26), US , pages 2371 - 2383, XP055918977, ISSN: 0024-9297, DOI: 10.1021/acs.macromol.9b00065
- DONG CHANG-MING, QIU KUN-YUAN, GU ZHONG-WEI, FENG XIN-DE: "Synthesis of star-shaped poly(D,L-lactic acid-alt-glycolic acid)-b-poly(L-lactic acid) with the poly(D,L-lactic acid-alt-glycolic acid) macroinitiator and stannous octoate catalyst", JOURNAL OF POLYMER SCIENCE PART A: POLYMER CHEMISTRY, JOHN WILEY & SONS, INC., US, vol. 40, no. 3, 1 February 2002 (2002-02-01), US , pages 409 - 415, XP055918981, ISSN: 0887-624X, DOI: 10.1002/pola.10132

## Description

### [Technical Field]

### Cross-reference to Related Application

The present application is based on, and claims priority from, Korean Patent Application Nos. 10-2020-0128319 and 10-2021-0131495, filed on October 5, 2020, and October 5, 2021, respectively.

The present invention relates to a copolymer having an improved elongation and a high molecular weight at the same time while maintaining intrinsic properties of polylactic acid, and a preparation method thereof.

### [Background Art]

Polylactic acid (PLA) is a plant-derived resin obtained from plants such as corn, etc., and is receiving attention as an eco-friendly material having biodegradable properties while having excellent tensile strength and elastic modulus.

Unlike petroleum-based resins such as polystyrene resins, polyvinyl chloride resins, polyethylene resins, etc., which are currently used, polylactic acid has effects of preventing depletion of petroleum-based resources and suppressing carbon dioxide emissions, and therefore, causes less environmental pollution, which is a disadvantage of petroleum-based plastic products. As environmental pollution caused by waste plastics and the like has emerged as social problems, efforts have been made to expand the application of polylactic acid to various fields, including food packing materials and containers, cases for electronic products, etc., to which general plastics (petroleum-based resins) have been applied.

However, since polylactic acid has poor impact resistance and heat resistance, as compared to the existing petroleum-based resins, there is a limitation in its application. In addition, polylactic acid has a poor elongation to break to exhibit brittleness, which limits its use as a general-purpose resin.

To overcome the above disadvantages, studies have been conducted on copolymers including other repeating units in addition to polylactic acid. In particular, to improve the elongation, 3-hydroxypropionic acid (3HP) has attracted attention as a comonomer. Specifically, a lactic acid-3HP block copolymer has received attention, and this copolymer has effects of improving the elongation while maintaining intrinsic properties of polylactic acid. Lactic acid-3HP block copolymers are disclosed in CN 100 372 881 C.

However, the lactic acid-3HP block copolymer has several disadvantages. First, only 3HP needs to be separately polymerized. There is a problem in that it is difficult to polymerize 3HP having a high molecular weight of about 10k Da or more only by a chemical method. High molecular weight polymerization is possible through biosynthesis, but there is a problem in that the production cost is increased.

Accordingly, it is required to prepare a copolymer having an improved elongation and a high molecular weight at the same time while maintaining intrinsic properties of polylactic acid.

### [Disclosure]

### [Technical Problem]

There is provided a copolymer having an improved elongation and a high molecular weight at the same time while maintaining intrinsic properties of polylactic acid, and a preparation method thereof.

### [Technical Solution]

To achieve the above objects, provided is a copolymer comprising an irregularly arranged structure of a repeating unit of the following Chemical Formula 1 and a repeating unit of the following Chemical Formula 2, and a repeating unit of the following Chemical Formula 3 is arranged at least one end of the structure:

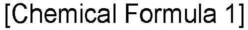

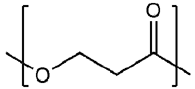

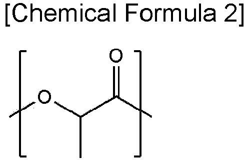

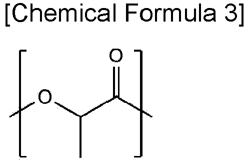

To provide a copolymer having an improved elongation and a high molecular weight at the same time while maintaining intrinsic properties of polylactic acid, the present invention provides a copolymer including a repeating unit represented by Chemical Formula 1, derived from 3HP, a repeating unit represented by Chemical Formula 2, derived from lactic acid, and a repeating unit represented by Chemical Formula 3, derived from lactide.

In particular, the copolymer according to the present invention may have a structure, in which the repeating unit of Chemical Formula 1 and the repeating unit of Chemical Formula 2 are irregularly arranged, and the repeating unit of Chemical Formula 3 is arranged at least one end or at both ends of the structure. In other words, the copolymer according to the present invention may have a structure of A-B or B-A-B, wherein A has a random arrangement of the repeating unit of Chemical Formula 1 and the repeating unit of Chemical Formula 2, and B's have an arrangement of the repeating unit of Chemical Formula 3, respectively.

Hereinafter, each repeating unit will be described in detail.

### Repeating unit of Chemical Formula 1 and Repeating unit of Chemical Formula 2

The repeating unit of Chemical Formula 1 and the repeating unit of Chemical Formula 2 may form a central structure of the copolymer according to the present invention, and may be derived from 3HP and lactic acid, respectively, and the central structure may be prepared by copolymerizing 3HP and lactic acid, as described below.

When 3HP is used as a comonomer of polylactic acid, elongation may be improved while maintaining intrinsic physical properties of polylactic acid, but there is a problem in that polymerization of 3HP does not occur well. Therefore, there has been a limitation in the preparation of a copolymer having a high molecular weight by using a lactic acid-3HP block copolymer. However, in the present invention, a copolymer having a high molecular weight may be prepared by polymerization of 3HP with lactic acid, rather than separate polymerization of only 3HP.

Preferably, a weight ratio of the repeating unit of Chemical Formula 1 and the repeating unit of Chemical Formula 2 is 20:80 to 80:20. More preferably, the weight ratio is 30:70 to 70:30, 40:60 to 60:40. The weight ratio may be adjusted according to the amount of each material used during the copolymerization of lactic acid and 3HP.

Further, since the copolymer according to the present invention is prepared by preparing a copolymer including the repeating unit of Chemical Formula 1 and the repeating unit of Chemical Formula 2, i.e., a random copolymer of the repeating unit of Chemical Formula 1 and the repeating unit of Chemical Formula 2, and then preparing a copolymer including the repeating unit of Chemical Formula 3, as described below, it is possible to measure the weight average molecular weight of the random copolymer.

Preferably, a weight average molecular weight of the random copolymer of the repeating unit of Chemical Formula 1 and the repeating unit of Chemical Formula 2 is 10,000 g/mol to 30,000 g/mol. This weight average molecular weight is higher than that of the known lactic acid-3HP block copolymer, and therefore, in the present invention, it is possible to prepare a copolymer having a high molecular weight even using 3HP as the comonomer of polylactic acid.

Meanwhile, as used herein, the 'lactic acid' refers to L-lactic acid, D-lactic acid, or a mixture thereof.

### Repeating unit of Chemical Formula 3

As described above, the copolymer according to the present invention has a structure of A-B or B-A-B, wherein B has a structure having an arrangement of the repeating unit of Chemical Formula 3.

Specifically, the arrangement of the repeating unit represented by Chemical Formula 3 may be further included at least one end or at both ends of the above-described random copolymer of the repeating unit of Chemical Formula 1 and the repeating unit of Chemical Formula 2 through lactide ring-opening polymerization, as described below.

The repeating unit of Chemical Formula 3 is derived from lactide, and is to additionally introduce a repeating unit such as Chemical Formula 2 to the copolymer according to the present invention, whereby the weight average molecular weight of the copolymer according to the present invention may be increased, and intrinsic physical properties of polylactic acid may be manifested.

Preferably, the repeating unit 3 is included in an amount of 60 wt% to 99 wt% with respect to the total weight of the copolymer according to the present invention. In other words, the total weight of the repeating unit of Chemical Formula 1 and the repeating unit of Chemical Formula 2 is preferably 1 wt% to 40 wt% with respect to the total weight of the copolymer according to the present invention. More preferably, the total weight of the repeating unit of Chemical Formula 1 and the repeating unit of Chemical Formula 2 is 2 wt% or more, 3 wt% or more, 4 wt% or more, or 5 wt% or more, and 35 wt% or less, 30 wt% or less, 25 wt% or less, 20 wt% or less, or 15 wt% or less with respect to the total weight of the copolymer according to the present invention.

The content of the repeating unit 3 may be adjusted according to the amount of lactide used during the copolymerization of lactide.

Meanwhile, as used herein, the 'lactide' refers to L-lactide, D-lactide, meso-lactide consisting of each one of L-form and D-form, or D,L-lactide or rac-lactide, in which L-lactide and D-lactide are mixed at a weight ratio of 50:50.

### Copolymer

The above-described copolymer according to the present invention employs, as an initiator, the random copolymer of the repeating unit represented by Chemical Formula 1 and the repeating unit represented by Chemical Formula 2, and thus there is an advantage in that various physical properties may be achieved by adjusting the monomer ratio in the random copolymer as the initiator. Further, by controlling crystallinity of the initiator itself, the intrinsic properties of polylactic acid are maintained while particularly improving the elongation and increasing the weight average molecular weight.

Preferably, a weight average molecular weight (g/mol) of the copolymer is 50,000 to 300,000. As described above, 3HP and lactic acid are first copolymerized, and then lactide is subjected to ring-opening polymerization, thereby preparing the copolymer having the high weight average molecular weight. Preferably, the weight average molecular weight of the copolymer is 60,000 or more, 70,000 or more, 80,000 or more, 90,000 or more, or 100,000 or more. Meanwhile, a method of measuring the weight average molecular weight will be described below.

Further, the copolymer according to the present invention has a tensile strength of 20 MPa to 50 MPa. Further, the copolymer according to the present invention has an elongation of 4% to 200%. As compared to a polylactic acid having the same weight average molecular weight, the copolymer according to the present invention has a tensile strength at the similar level, but has an improved elongation, which is attributed to 3HP included in the copolymer, as described above. Meanwhile, methods of measuring the tensile strength and the elongation will be described below.

### Method of preparing copolymer

Further, the present invention provides a method of preparing the above-described copolymer, wherein the method comprises the following steps of:
1) preparing an oligomer by polycondensation of 3-hydroxypropionic acid and lactic acid; and
2) polymerizing the oligomer of the step 1 and lactide.

The step 1 is a step of preparing the above-described random copolymer of the repeating unit of Chemical Formula 1 and the repeating unit of Chemical Formula 2.

Preferably, the step 1 is performed in the presence of an acid catalyst or a metal catalyst. Examples of the acid catalyst may include an organic acid, preferably, p-toluenesulfonic acid. Examples of the metal catalyst may include a phosphorus-based catalyst or a tin-based catalyst.

Preferably, the amount of the catalyst used in the step 1 may be 0.01 mol% to 10 mol%, 0.1 mol% to 5 mol%, or 0.2 mol% to 1 mol%, assuming that the total number of moles of 3-hydroxypropionic acid and lactic acid is 100 mol%.

Preferably, the step 1 is performed at 100°C to 150°C. Preferably, the step 1 is performed for 10 hours to 80 hours, and more preferably, for 20 hours to 60 hours. Preferably, the step 2 is performed at 0.01 mbar to 50 mbar.

Preferably, the step 2 is performed in the presence of a lactide ring-opening polymerization catalyst. For example, the catalyst may be a catalyst represented by Chemical Formula 4.

[Chemical Formula 4] MA¹ₚA²₂₋ₚ

in Chemical Formula 4,
M is Al, Mg, Zn, Ca, Sn, Fe, Y, Sm, Lu, Ti, or Zr,
p is an integer of 0 to 2, and
A¹ and A² are each independently an alkoxy group or a carboxyl group.

More specifically, the catalyst represented by Chemical Formula 4 may be tin(II) 2-ethylhexanoate (Sn(Oct)₂).

Preferably, the amount of the catalyst used in the step 2 may be 0.01 mol% to 10 mol%, 0.01 mol% to 5 mol%, or 0.03 mol% to 1 mol%, assuming that the total number of moles of oligomer of the step 1 and lactide is 100 mol%.

Preferably, the step 2 is performed at 150°C to 200°C. Preferably, the step 2 is performed for 5 minutes to 10 hours, and more preferably, for 10 minutes to 1 hour. Preferably, the step 2 is performed at 0.5 mbar to 1.5 mbar.

On the other hand, the step 2 may be performed by bulk polymerization substantially without using a solvent. In this regard, 'substantially without using a solvent' may include a case of using a small amount of a solvent for dissolving the catalyst, for example, up to less than 1 ml of the solvent per 1 kg of the monomer used. When the step 2 is performed by bulk polymerization, it is possible to omit a process of removing the solvent after the polymerization, and thus it is possible to suppress the decomposition or loss of the resin during the process of removing the solvent.

### [Effect of the Invention]

As descried above, the copolymer according to the present invention is characterized by maintaining intrinsic properties of polylactic acid while particularly having an improved elongation and also having a high weight average molecular weight.

### [Detailed Description of the Embodiments]

Hereinafter, exemplary embodiments of the present invention will be described in more detail in the following Examples. However, the following Examples are only for illustrating the exemplary embodiments of the present invention, and the content of the present invention is not limited to the following Examples.

Hereinafter, a weight average molecular weight, a tensile strength, and an elongation were measured by the following methods.
- Weight average molecular weight: Measurement was performed by GPC using PC Standards and Agilent 1200 series.
- Elongation, Tensile strength, and Tensile modulus: Measurement was performed in accordance with ASTM D638. Each copolymer was prepared in the form of pellet, and then processed into a dog-bone specimen, followed by measuring using a universal testing machine (UTM). At this time, the measurement speed was 10 mm/min.
- Content of 3HP (wt%) in copolymer: Measurement was performed by NMR analysis of each copolymer.

### Preparation Examples 1 to 4

In a reactor, 3-Hydroxypropionic acid (3HP), lactic acid (LA), and a catalyst (p-TSA; 0.3 wt% with respect to the total weight of 3HP and LA) were put in each amount as described in Table 1 below, and dried under conditions of 70°C and 50 mbar for 3 hours. Subsequently, the temperature and the pressure in the reactor were controlled to 130°C and 20 mbar, and then a polycondensation reaction was allowed for 24 hours.

With respect to each of the prepared random copolymers, the content of 3HP in each copolymer and its weight average molecular weight were measured and shown in Table 1 below.

**[Table 1]**

| | 3HP input (g) | LA input (g) | 3HP input ratio (wt%) | 3HP content (wt%) in copolymer | Weight average molecular weight (Mw, g/mol) of random copolymer |
|---|---|---|---|---|---|
| Preparation Example 1 | 7 | 3 | 70 | 68 | 16,700 |
| Preparation Example 2 | 5 | 5 | 50 | 44 | 15,850 |
| Preparation Example 3 | 3 | 7 | 30 | 31 | 27,600 |
| Preparation Example 4 | 10 | 0 | 100 | 100 | 2,430 |

### Examples and Comparative Examples

As in Table 2 below, each of the random copolymers prepared in Preparation Examples, lactide, and a catalyst (Tin Octoate, 0.05 mol% with respect to lactide) were put in a reactor, which was controlled to 170°C and 20 mbar, and a lactide ring-opening polymerization was allowed for 30 minutes.

Meanwhile, in Table 2 below, Comparative Example 1 indicates a copolymer prepared by ring-opening polymerization using lactide alone without using the random copolymer prepared in Preparation Example.

**[Table 2]**

| | Random copolymer | Lactide |
|---|---|---|
| Example 1-1 | Random copolymer of Preparation Example 1 (10 wt%) | lactide (90 wt%) |
| Example 1-2 | Random copolymer of Preparation Example 1 (30 wt%) | lactide (70 wt%) |
| Example 1-3 | Random copolymer of Preparation Example 1 (5 wt%) | lactide (95 wt%) |
| Example 2-1 | Random copolymer of Preparation Example 2 (10 wt%) | lactide (90 wt%) |
| Example 3-1 | Random copolymer of Preparation Example 3 (10 wt%) | lactide (90 wt%) |
| Example 3-2 | Random copolymer of Preparation Example 3 (20 wt%) | lactide (80 wt%) |
| Example 4-1 | Random copolymer of Preparation Example 3 (30 wt%) | lactide (70 wt%) |
| Comparative Example 1 | None | lactide (100 wt%) |
| Comparative Example 2 | Random copolymer of Preparation Example 4 (10 wt%) | lactide (90 wt%) |

### Experimental Example

A weight average molecular weight, a tensile strength, and an elongation were measured for the copolymers prepared in Examples and Comparative Examples, and the results are shown in Table 3 below.

**[Table 3]**

| | 3HP content (wt%) in copolymer | Weight average molecular weight (Mw, g/mol) | Tensile strength (MPa) | Elongation (%) |
|---|---|---|---|---|
| Example 1-1 | 7.2 | 164,650 | 36.80 | 14.90 |
| Example 1-2 | 21.0 | 80,900 | 27.7 | 107 |
| Example 1-3 | 3.8 | 214,500 | 44.5 | 3.4 |
| Example 2-1 | 5.0 | 190,370 | 32.40 | 5.0 |
| Example 3-1 | 2.5 | 255,000 | 41.45 | 4.3 |
| Example 3-2 | 7.6 | 179,200 | 32.8 | 66.2 |
| Example 4-1 | 9.8 | 108,360 | 28.73 | 152.5 |
| Comparative Example 1 | 0 | 239,000 | 50.13 | 2.2 |
| Comparative Example 2 | 10 | 31,700 | Evaluation of physical properties was impossible due to low molecular weight | |

As shown in Table 2, it was confirmed that the copolymer according to the present invention had the increased elongation, as compared with the copolymer prepared by polymerizing lactide alone (Comparative Example 1). When Example 4 was compared with Comparative Example 2, in which lactic acid was not used in the polymerization, the effect of increasing the molecular weight was observed when lactic acid was copolymerized, indicating improvement of physical properties.

## Claims

1. A copolymer comprising an irregularly arranged structure of a repeating unit of the following Chemical Formula 1 and a repeating unit of the following Chemical Formula 2, and
a repeating unit of the following Chemical Formula 3 is arranged at least one end of the structure:

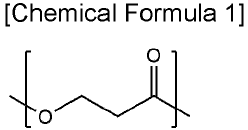

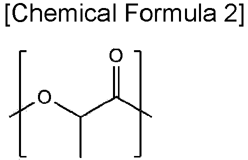

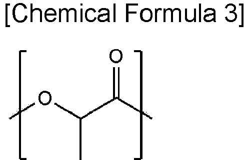

2. The copolymer of claim 1, wherein
a weight ratio of the repeating unit of Chemical Formula 1 and the repeating unit of Chemical Formula 2 is 20:80 to 80:20.

3. The copolymer of claim 1, wherein
a total weight of the repeating unit of Chemical Formula 1 and the repeating unit of Chemical Formula 2 is 1 wt% to 40 wt% with respect to the total weight of the copolymer.

4. The copolymer of claim 1, wherein
a total weight of the repeating unit of Chemical Formula 1 and the repeating unit of Chemical Formula 2 is 5 wt% to 15 wt% with respect to the total weight of the copolymer.

5. The copolymer of claim 1, wherein
the copolymer has a weight average molecular weight of 50,000 g/mol to 300,000 g/mol, wherein the weight average molecular weight is determined in accordance with the method disclosed in the specification.

6. The copolymer of claim 1, wherein
the copolymer has a tensile strength of 20 MPa to 50 MPa, wherein the tensile strength is determined in accordance with the method disclosed in the specification.

7. The copolymer of claim 1, wherein
the copolymer has an elongation of 4% to 200%, wherein the elongation is determined in accordance with the method disclosed in the specification.

8. A method of preparing the copolymer of any one of claims 1 to 7, wherein the method comprises the following steps of:
1) preparing an oligomer by polycondensation of 3-hydroxypropionic acid and lactic acid; and
2) polymerizing the oligomer of the step 1 and lactide.

9. The method of claim 8, wherein
a catalyst of the step 2 is a catalyst represented by the following Chemical Formula 4:
[Chemical Formula 4] MA¹ₚA²₂₋ₚ
in Chemical Formula 4,
M is Al, Mg, Zn, Ca, Sn, Fe, Y, Sm, Lu, Ti, or Zr,
p is an integer of 0 to 2, and
A¹ and A² are each independently an alkoxy group or a carboxyl group.

10. The method of claim 8, wherein
a catalyst of the step 2 is tin(II) 2-ethylhexanoate.

## Patentansprüche

1. Copolymer, umfassend eine unregelmäßig angeordnete Struktur einer Wiederholungseinheit der folgenden chemischen Formel 1 und einer Wiederholungseinheit der folgenden chemischen Formel 2, und
wobei eine Wiederholungseinheit der folgenden chemischen Formel 3 an mindestens einem Ende der Struktur angeordnet ist:

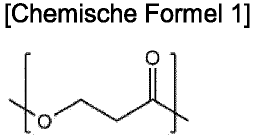

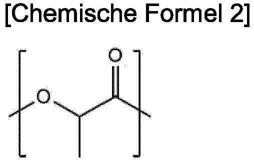

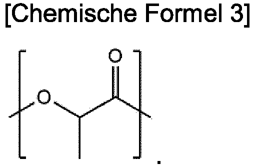

2. Copolymer nach Anspruch 1, wobei
ein Gewichtsverhältnis der Wiederholungseinheit der chemischen Formel 1 und der Wiederholungseinheit der chemischen Formel 2 20:80 bis 80:20 beträgt.

3. Copolymer nach Anspruch 1, wobei
ein Gesamtgewicht der Wiederholungseinheit der chemischen Formel 1 und der Wiederholungseinheit der chemischen Formel 2 1 Gew.-% bis 40 Gew.-%, bezogen auf das Gesamtgewicht des Copolymers, beträgt.

4. Copolymer nach Anspruch 1, wobei
ein Gesamtgewicht der Wiederholungseinheit der chemischen Formel 1 und der Wiederholungseinheit der chemischen Formel 2 5 Gew.-% bis 15 Gew.-%, bezogen auf das Gesamtgewicht des Copolymers, beträgt.

5. Copolymer nach Anspruch 1, wobei
das Copolymer ein gewichtsmittleres Molekulargewicht von 50.000 g/mol bis 300.000 g/mol aufweist, wobei das gewichtsmittlere Molekulargewicht gemäß dem in der Beschreibung offenbarten Verfahren bestimmt wird.

6. Copolymer nach Anspruch 1, wobei
das Copolymer eine Zugfestigkeit von 20 MPa bis 50 MPa aufweist, wobei die Zugfestigkeit gemäß dem in der Beschreibung offenbarten Verfahren bestimmt wird.

7. Copolymer nach Anspruch 1, wobei
das Copolymer eine Dehnung von 4 % bis 200 % aufweist, wobei die Dehnung gemäß dem in der Beschreibung offenbarten Verfahren bestimmt wird.

8. Verfahren zur Herstellung des Copolymers nach einem der Ansprüche 1 bis 7, wobei das Verfahren die folgenden Schritte umfasst:
1) Herstellen eines Oligomers durch Polykondensation von 3-Hydroxypropionsäure und Milchsäure; und
2) Polymerisieren des Oligomers aus Schritt 1 und Lactid.

9. Verfahren nach Anspruch 8, wobei
ein Katalysator aus Schritt 2 ein Katalysator ist, der durch die folgende Chemische Formel 4 dargestellt wird:
[Chemische Formel 4] MA¹ₚA²₂₋ₚ
wobei in der Chemischen Formel 4
M AI, Mg, Zn, Ca, Sn, Fe, Y, Sm, Lu, Ti oder Zr ist,
p eine ganze Zahl von 0 bis 2 ist, und
A¹ und A² jeweils unabhängig eine Alkoxygruppe oder eine Carboxylgruppe sind.

10. Verfahren nach Anspruch 8, wobei
ein Katalysator aus Schritt 2 Zinn(II)-2-ethylhexanoat ist.

## Revendications

1. Copolymère comprenant une structure agencée irrégulièrement d'une unité de répétition de la Formule chimique 1 ci-après et d'une unité de répétition de la Formule chimique 2 ci-après, et
une unité de répétition de la Formule chimique 3 ci-après est agencée à au moins une extrémité de la structure :

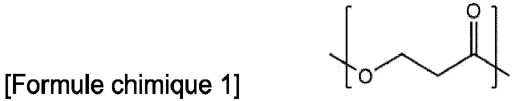

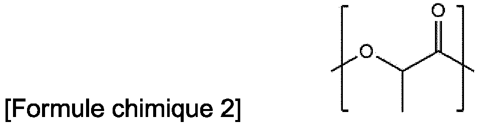

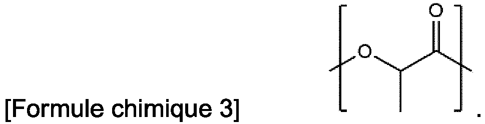

2. Copolymère selon la revendication 1, dans lequel
un rapport en poids de l'unité de répétition de la Formule chimique 1 et de l'unité de répétition de la Formule chimique 2 est compris entre 20:80 et 80:20.

3. Copolymère selon la revendication 1, dans lequel
un poids total de l'unité de répétition de la Formule chimique 1 et de l'unité de répétition de la Formule chimique 2 est compris entre 1 % en poids et 40 % en poids pour le poids total du copolymère.

4. Copolymère selon la revendication 1, dans lequel
un poids total de l'unité de répétition de la Formule chimique 1 et de l'unité de répétition de la Formule chimique 2 est compris entre 5 % en poids et 15 % en poids pour le poids total du copolymère.

5. Copolymère selon la revendication 1, dans lequel
le copolymère a une masse moléculaire moyenne en poids comprise entre 50 000 g/mol et 300 000 g/mol, dans lequel la masse moléculaire moyenne en poids est déterminée selon le procédé décrit dans la spécification.

6. Copolymère selon la revendication 1, dans lequel
le copolymère a une résistance à la traction comprise entre 20 MPa et 50 MPa, dans lequel la résistance à la traction est déterminée selon le procédé décrit dans la spécification.

7. Copolymère selon la revendication 1, dans lequel
le copolymère a un allongement compris entre 4 % et 200 %, dans lequel l'allongement est déterminé selon le procédé décrit dans la spécification.

8. Procédé de préparation du copolymère selon l'une quelconque des revendications 1 à 7, dans lequel le procédé comprend les étapes suivantes de :
1) préparation d'un oligomère par polycondensation d'un acide 3-hydroxypropionique et d'un acide lactique ; et
2) polymérisation de l'oligomère de l'étape 1 et d'un lactide.

9. Procédé selon la revendication 8, dans lequel
un catalyseur de l'étape 2 est un catalyseur représenté par la Formule chimique 4 ci-après :
[Formule chimique 4] MA¹ₚA²₂₋ₚ
dans la Formule chimique 4,
M est AI, Mg, Zn, Ca, Sn, Fe, Y, Sm, Lu, Ti ou Zr,
p est un nombre entier de 0 à 2, et
A¹ et A² sont chacun indépendamment un groupe alkoxy ou un groupe carboxyle.

10. Procédé selon la revendication 8, dans lequel
un catalyseur de l'étape 2 est l'étain (II) 2-éthylhexanoate.
